# EUROPÄISCHE PATENTSCHRIFT

(11) **EP 0 810 798 B1**
(45) Veröffentlichungstag und Bekanntmachung des Hinweises auf die Patenterteilung: **08.08.2007**
(21) Anmeldenummer: 97108170.8
(22) Anmeldetag: 20.05.1997
(51) Int. Cl.: H04Q 3/545

(54) **Verfahren und Anordnung für eine zentrale Steuerung in einem programmgesteuerten Kommunikationssystem zum autonomen Konfigurieren einer Prozesstruktur**
Method and device for a central control in a program controlled communication system for autonomous configuring of a process structure
Procédé et dispositif pour une commande centrale dans un système de communication à commande programmée pour configurer une structure de processus de façon autonome

(30) Priorität: 31.05.1996 DE 19622065
(43) Veröffentlichungstag der Anmeldung: 03.12.1997
(73) Patentinhaber: SIEMENS AKTIENGESELLSCHAFT, 80333 München (DE)
(72) Erfinder: Gericke, Harald, 46119 Oberhausen (DE); Köninger, Reinhard, 45894 Gelsenkirchen (DE)

(56) Entgegenhaltungen:
- EP-A- 0 229 378
- WO-A-89/07870
- DE-A- 4 310 558

## Beschreibung

Die Vielfalt bekannter Kommunikationssysteme reicht von einfachen Telefonsystemen für die ausschließliche Übertragung von Sprache bis hin zu komplexen ISDN-Kommunikationssystemen. Unabhängig vom Komplexitätsgrad besteht ein Kommunikationssystem im Prinzip aus einer Vielzahl vermittlungstechnischer Funktionseinheiten und einer programmierbaren Datenbearbeitungseinrichtung, die diese Funktionseinheiten steuert und dabei alle vermittlungstechnischen Abläufe überwacht.

Aus der DE-OS 3804819 ist zum Beispiel ein Kommunikationssystem bekannt, das eine zentrale Steuereinrichtung sowie eine Vielzahl von zur Entlastung der zentralen Steuereinrichtung dienenden peripheren Baugruppen-Steuereinrichtungen aufweist. Beide Arten von Steuereinrichtungen stellen jeweils für sich selbständige programmgesteuerte Verarbeitungseinrichtungen dar, die über Datenübertragungsstrecken miteinander verbunden sind.

Aus der DE-OS 4310558 ist ein Verfahren zum bedarfsgesteuerten Programmladen für dezentrale Prozessoreinrichtungen in einem Kommunikationssystem bekannt, mit dem der Ladevorgang zur Übermittlung des Programmcodes von einer zentralen Prozessoreinrichtung in den Programmspeicher einer jeweiligen dezentralen Prozessoreinrichtung hinsichtlich des zeitlichen Aufwandes optimiert wird.

Die peripheren Prozessoreinrichtungen befinden sich auf sogenannten Anschlußbaugruppen, die der Schnittstellenanpassung zwischen einer zentralen Steuerung des Kommunikationssystems und Endgeräten sowie Kommunikationsnetzen mit unterschiedlichen Kommunikationsarten und unterschiedlichen Signalisierungsverfahren dienen.

Um den speziellen Steuerungsaufgaben eines Kommunikationssystems gerecht zu werden, sind sowohl die zentrale Prozessoreinrichtung als auch die peripheren Prozessoreinrichtungen jeweils mit einem Betriebssystem versehen, das die für ein Kommunikationssystem typische Vielzahl von quasi gleichzeitig anfallenden und zuerledigenden Einzelfunktionen koordinieren soll. Die wesentliche Aufgabe eines Betriebssystems besteht dabei darin, in Abhängigkeit von eingetroffenen und in dem Kommunikationssystem intern gebildeten Anreizinformationen unterschiedliche Programmodule der Prozessoreinrichtung zur Ausführung zuzuweisen. Nähere Informationen über die Funktionsweise eines Betriebssystems in einem Kommunikationssystem sind zum Beispiel der EP 0472775 zu entnehmen.

Vor allem Kostenaspekte und die gesteigerte Leistungsfähigkeit bei Mikroprozessoren haben die Entwicklung hin zum Ein-Prozessor-Kommunikationssystem begünstigt. Ein derartiges Kommunikationssystem ist z.B. aus der DE-OS 4309847 bekannt und weist eine zentrale Steuereinrichtung mit einem Mikroprozessor auf, wobei an die zentrale Steuerung je nach Schnittstellenbedarf unterschiedliche periphere Einrichtungen, z.B. in Form von steckbaren Baugruppen, anschließbar sind.

Die peripheren Einrichtungen sind nach unterschiedlichen Funktionskategorien zu unterscheiden und sind analog zu den aus der bereits erwähnten DE-OS 4310558 bekannten Anschlußbaugruppen mit einer bestimmten Anzahl und Art von Anschlußschnittstelleneinrichtungen für eine bestimmte Kommunikationsart und für ein bestimmtes Signalisierungsverfahren versehen. Die peripheren Einrichtungen sind jedoch im Vergleich zur zentralen Prozessoreinrichtung als passive Einheiten anzusehen, die in ihrem hierarchichen Verhalten wie Controller-Bausteine an einem Mikroprozessor-Systembus zu verstehen sind.

Aufgabe der vorliegenden Erfindung ist es, Maßnahmen vorzusehen, so daß periphere Einrichtungen nach einer Neuinstallation oder einem Konfigurationswechsel ihrer individuellen Funktionskategorie entsprechend ohne weitere von extern vorzunehmende Einstellmaßnahmen im Kommunikationssystem berücksichtigt werden.

Gelöst wird diese Aufgabe durch die Merkmale des Patentanspruchs 1 bzw. 4.

Ein wesentlicher Vorteil des erfindungsgemäßen Verfahrens ist darin zu sehen, daß der Speicherbedarf für Programmcode im Kommunikationssystem insgesamt gering gehalten werden kann. Der Grund dafür besteht vor allem darin, daß für alle anschließbaren peripheren Einrichtungen unterschiedlicher Funktionskategorien nur ein Satz von Steuermodulen gespeichert wird, die dynamisch in Abhängigkeit der Funktionskategorie einer anzusteuernden peripheren Einrichtung ausgewählt und ausgeführt werden. Eine Mehrfachspeicherung des gleichen Programmcodes wird dadurch konsequent vermieden.

Ein weiterer Vorteil ist darin zu sehen, daß die relevanten Steuermodule unmittelbar als Prozesse eingerichtet und ausgeführt werden, wodurch ein programmgesteuertes Abfragen und eine notwendige Unterprogrammverzweigung auf das verantwortliche Steuermodul zugunsten der 'Performance' vermieden wird.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen im folgenden
- FIG 1: eine schematische Blockdarstellung eines drei Baugruppen aufweisenden Kommunikationssystems,
- FIG 2: ein Blockschaltbild mit den wesentlichen Hardwarekomponenten einer zentralen Steuerungsbaugruppe gemäß Figur 1,
- FIG 3: eine symbolische Darstellung von in der zentralen Steuereinrichtung gespeicherten Steuermodulen und Tabellen,
- FIG 4a,b: ein Ablaufdiagramm zur Veranschaulichung von im Rahmen einer Weiterbildung der Erfindung auszuführenden Verfahrensschritte.

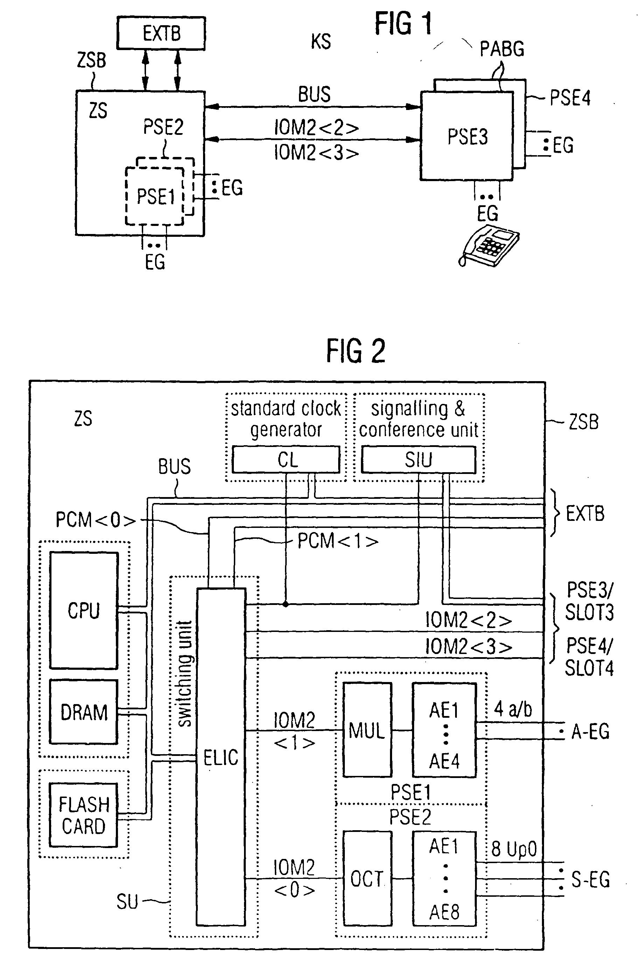

In FIG 1 ist ein Blockbild für den Baugruppenaufbau eines Kommunikationssystems KS dargestellt, in dem vorliegende Erfindung zur Anwendung kommen kann. Das Kommunikationssystem KS weist zum einen eine zentrale Steuerung ZS auf, die auf einer zentralen Steuerungsbaugruppe ZSB angeordnet ist. An die zentrale Steuerungsbaugruppe ZSB sind zwei periphere Anschlußbaugruppen PABG mit peripheren Einrichtungen PSE3, PSE4 anschließbar. Je nach Einsatzfall und Bedarf können peripheren Anschlußbaugruppen PABG mit einer peripheren Einrichtung PSE einer bestimmten Funktionskategorie, z. B. zum Leitungsanschluß, zum Teilnehmeranschluß für analoge, digitale oder ISDN-Geräte usw. angeschlossen sein.

Eine periphere Einrichtung PSE die z. B. der Funktionskategorie "Anschluß von analogen Teilnehmergeräten" zugehört, weist z.B. üblicherweise für jedes anschließbare Endgerät eine Schnittstellensteuerung mit Ruhe- und Schleifenschlußindikation auf, der ein Wandler zur Analog/Digital- bzw. Digital/Analog-Umsetzung und zum Programmieren der Eingangsimpedanz bzw. zur Pegelanpassung (nicht dargestellt) zugehört.

Die peripheren Einrichtungen PSE auf den peripheren Anschlußbaugruppen PABG sind im Vergleich zur zentralen Steuerung ZS als passive Einheiten anzusehen, an die von der zentralen Steuerung ZS - neben den Nutzsignalinformationen - im wesentlichen Meldungen für baugruppeninterne Einstellungen und Meldungen im Rahmen einer Signalisierung zugeleitet werden. Von den peripheren Einrichtungen PSE werden neben den Nutzsignalinformationen im Gegenzug Signalisierungsmeldungen und Statusinformationen an die zentrale Steuerung ZS zurückübermittelt. Je nach Funktionskategorie der im Kommunikationssystem KS vorhandenen peripheren Anschlußbaugruppen PABG, also der angeschlossenen peripheren Einrichtungen PSE, sind von der zentralen Steuerung ZS unterschiedliche Steuerungs- bzw. Schnittstellenprozeduren vorzusehen und das individuelle Verhalten der jeweils angeschlossenen peripheren Einrichtungen PSE zu berücksichtigen.

Auf der zentralen Steuerungsbaugruppe ZSB sind neben der zentralen Steuerung ZS zwei periphere Einrichtungen PSE1, PSE2 integriert, also nicht in Form von peripheren Anschlußbaugruppen PABG zusätzlich anschließbar. Diese auf der zentralen Steuerungsbaugruppe ZSB befindlichen peripheren Einrichtungen PSE1, PSE2 sollen die Betriebsfähigkeit des Kommunikationssystems KS in einer Minimalkonfiguration also ohne angeschlossene periphere Anschlußbaugruppen PABG sicherstellen. Die auf der zentralen Steuerungsbaugruppe ZSB befindlichen peripheren Einrichtungen PSE1, PSE2 stellen vier a/b-Ader-Anschlüsse und acht UP-Schnittstellen zur Verfügung.

Für einen weiteren Anschluß von nochmals vier peripheren Anschlußbaugruppen (nicht dargestellt) beliebiger Funktionskategorie ist eine Erweiterungsbaugruppe EXTB an die zentrale Steuerungsbaugruppe ZSB anschließbar.

In FIG 2 ist ein Blockschaltbild mit den wesentlichen Hardwarekomponenten auf der zentralen Steuerungsbaugruppe ZSB dargestellt. Die zentrale Steuerungsbaugruppe ZSB weist die zentrale Steuerung ZS und zwei periphere Einrichtungen PSE1, PSE2 auf.

Die zentrale Steuerung ZS setzt sich im wesentlichen aus einem Mikroprozessor CPU, z.B. des Typs Motorola MC68348, einem Schreib-lesespeicher DRAM in der Größe von z.B. 2 Megabyte, sowie aus einem Programm- und Festdatenspeicher FLASH-CARD zusammen, der aus nicht flüchtigen, aber elektrisch löschbaren, elektronischen Speicherbausteinen zusammengesetzt ist.

Des weiteren weist die zentrale Steuerung ZS einen Taktgenerator CL und eine Signalisiserungs- und Konferenzeinheit SIU sowie eine Durchschalteeinheit SU auf. Die Durchschalteeinheit SU ist im Prinzip durch eine Peripheriesteuerung ELIC realisiert, die sich im wesentlichen aus einer Signalisierungskanalsteuerung und einer Vermittlungseinheit (nicht dargestellt) zusammensetzt. In der Vermittlungseinheit ist im übrigen ein zeitschlitz-gesteuertes Koppelfeld (nicht dargestellt) mit 2.048 KB/s-Eingängen implementiert.

Die Peripheriesteuerung ELIC weist insgesamt drei bidirektional ausgestaltete PCM-strukturierte 2.048 KB/s-Anschlüsse PCM<0>,..,PCM<2> auf, von denen die ersten beiden zur Verbindung mit einer optionalen Erweitungsbaugruppe EXTB vorgesehen sind. Der dritte 2.048 KB/s-Anschluß PCM<2> ist sowohl mit dem Taktgenerator CL als auch mit der Signalisierungs- und Konferenzeinheit SIU verbunden. Des weiteren weist die Peripheriesteuerung ELIC insgesamt vier interne, ISDN-orientierte Systembusschnittstellen IOM2<0>,..,IOM2<3> auf. Diese Systembusschnittstellen stellen beispielsweise jeweils 32 gemultiplexte bidirektionale 64 KB/s-Nachrichtenkanäle zur Verfügung, in die zu übermittelnde Informationen in PCM-codierter Form eingefügt sind. Von den insgesamt vier internen Systembusschnittstellen IOM2<0>,..,IOM2<3> sind die ersten beiden IOM2<0>, IOM2<1> mit jeweils einer auf der zentralen Steuerungsbaugruppe ZSB befindlichen peripheren Einrichtung PSE1, PSE2 verbunden. Die anderen beiden Systembusschnittstellen IOM2<2> und IOM2<3> sind zum Anschluß jeweils einer peripheren Einrichtung PSE3, PSE4 auf peripheren Anschlußbaugruppen PABG vorgesehen.

Die auf der zentralen Steuerungsbaugruppe ZSB angeordneten peripheren Einrichtungen PSE1 und PSE2 ermöglichen zum einen den Anschluß von vier analogen Kommunikationsendgeräten A-EG mittels a/b-Schnittstellen und zum anderen den Anschluß von acht Systemendgeräten S-EG mit UP-Schnittstelle, die auf dem Zeitgetrenntlage-Übertragungsverfahren basiert. Die zum Anschluß der analogen Endgeräte A-EG vorgesehenen periphere Einrichtung PSE1 setzt sich im wesentlichen aus einem bidirektionalen Multiplexer MUL und vier Anschlußeinheiten AE1 bis AE4 auf. Die zum Anschluß der Systemendgeräte S-EG vorgesehene periphere Einrichtung PSE2 weist eine Übertragungseinheit OCT mit acht Übertragungsschaltungen auf. Durch jede dieser Übertragungsschaltungen ist eine nach dem Zeitgetrenntlage-Übertragungsverfahren wirkende UP-Schnittstelle realisiert. Der Übertragungseinheit OCT sind in Richtung der Systemendgeräte S-EG ebenfalls Anschlußeinrichtungen AE1 bis AE7 zur Leitungsanpassung nachgeschaltet. Nähere Informationen über die vermittlungstechnischen Zusammenhänge, insbesondere über die Ausgestaltung der erwähnten Einrichtungen sind der eingangs erwähnten DE-OS 4309847 zu entnehmen.

Zum Anschluß zusätzlicher Endgeräte und Netzen mit anderen Schnittstellen, als den durch die peripheren Einrichtungen PSE1 und PSE2 unterstützen, sind eine Vielzahl von peripheren Anschlußbaugruppentypen verfügbar, von denen z.B. eine mit vier ISDN-Basisanschlußeinheiten zur Bildung von S0-Schnitt stellen versehen ist.

Die peripheren Einrichtungen PSE auf den peripheren Anschlußbaugruppen PABG haben im wesentlichen die gleichen Hardware-Schnittstelle, nämlich den Systembus BUS und eine ISDN-orientierte Systembusschnittstelle IOM2<x>.

Je nach Bedarf kann das Kommunikationssystem KS mit weiteren peripheren Anschlußbaugruppen PABG gleicher oder unterschiedlicher Funktionskategorien ergänzt werden. Zwei periphere Anschlußbaugruppen PABG sind dabei unmittelbar an die zentrale Steuerungsbaugruppe ZSB anschließbar und vier periphere Anschlußbaugruppen PABG sind unter Zwischenschaltung einer Erweiterungsbaugruppe EXTB mit der zentralen Steuerungsbaugruppe ZSB verbindbar.

Die Auswahl der peripheren Einrichtungen PSE nach ihren Funktionskategorien erfolgt gemäß der zu bedienenden Endgerätekonfiguration eines Kunden und dessen Kommunikationswünschen in den verschiedenen Netzen. Insgesamt sind z. B. zwölf periphere Anschlußbaugruppentypen vorhanden, die einzeln und in beliebiger Kombination miteinander anschließbar sind.

Im Gegensatz zur elektrischen und mechanischen Schnittstelle der peripheren Anschlußbaugruppen PABG zur zentralen Steuerungsbaugruppe ZSB bzw. zur Erweiterungsbaugruppe EXTB ist die Softwareschnittstelle, also die Abwicklung der Protokollsteuerung, der Leitungssignalisierung sowie der Leitungsanpassung etc. bei den peripheren Einrichtungen PSE unterschiedlicher Funktionskategorie auch unterschiedlich. Deshalb muß in Abhängigkeit der Funktionskategorie einer peripheren Einrichtung PSE zur Ansteuerung und internen Kommunikation mit dieser ein auf die betreffende Funktionskategorie abgestimmtes Steuermodul von dem Mikroprozessor CPU der zentralen Steuerung ZS ausgeführt werden.

Die Ansteuerung von peripheren Einrichtungen und die Abwicklung der funktionskategorie-individuellen Protokollsteuerung und Leitungssignalisierungen mit den peripheren Einrichtungen PSE der angeschlossenen peripheren Anschlußbaugruppen PABG wird von der zentralen Steuerung ZS über den Systembus BUS realisiert. An dieser Stelle sei noch erwähnt, daß es aus Gründen der 'Performance' erforderlich sein kann, im Falle einer angeschlossenen Erweiterungsbaugruppe EXTB die zentrale Steuerung ZS durch einen auf der Erweiterungsbaugruppe EXTB befindlichen Mikroprozessor mit Arbeits- und Programmspeicher zu ergänzen. Auf die Ausgestaltung und Funktion der Erweitungsbaugruppe EXTB wird im weiteren aber nicht näher eingegangen.

Zur Koordination von in einem Kommunikationssystem im Rahmen seiner Funktionsvielfalt anfallenden Einzelaufgaben dient ein sogenanntes Multitasking-Betriebssystem, das in Form eines Programmes von dem Mikroprozessor CPU der zentralen Steuerung ZS ausgeführt wird und das in Abhängigkeit von Prioritäten, Anreizen und Zuständen dem Mikroprozessor CPU Programmsequenzen zur Ausführung zuweist. Die Softwarearchitektur eines Kommunikationssystems unterscheidet zwischen Programmodulen (deren Abarbeitung als 'task' oder Prozeß bezeichnet wird) für die Peripherietechnik, die Leitungstechnik und die Vermittlungstechnik.

Nähere Informationen zur Softwarearchitektur von Kommunikationssystem sind der Literaturstelle "ISDN im Büro", Sonderausgabe telcom-report und Siemens-Magazin COM, 1985, ISBN 3-8009-3846-4, Seiten 67 bis 83 zu entnehmen. Die Funktion eines Multitasking-Betriebssystems ist dem Fachmann im wesentlichen als bekannt anzusehen und ist überdies auch in der eingangs genannten EP 0472775 grundsätzlich beschrieben.

Vor der allerersten Inbetriebnahme des Kommunikationssystems KS ist der Programm- und Festdatenspeicher FLASH-CARD der zentralen Steuerung ZS vom Hersteller mit einem Gesamtprogramm, das Steuermodule für alle möglichen Funktionskategorien von peripheren Einrichtungen PSE beinhaltet, versehen worden. Dabei wurde auch bereits das Betriebsystem BS und die Prozeßstruktur im Hinblick auf vermittlungstechnische und leitungstechnische Aufgaben und Funktionen komplett vorstrukturiert. Im einzelnen bedeutet dies, daß im Betriebssystem die auf die Vermittlungs- und Leitungstechnk bezogenen Prozesse bereits eingerichtet sind. Die Prozesse werden mit Hilfe von individuell zugeordneten Prozeßidentifikatoren, das sind üblicherweise Prozeßnummern identifiziert und verwaltet. Bei Aktivierung eines Prozesses wird das den jeweiligen Prozeß realisierende im Programm- und Festdatenspeicher FLASH-CARD hinterlegte Programmodul ausgeführt. An welcher Stelle im Programm- und Festdatenspeicher FLASH-CARD das betreffende Programmodul hinterlegt ist, ist dem Betriebssystem BS zu jedem gültigen, d.h. vom Betriebssystem vergebenen Prozeßidentifikator bekannt.

Bei den für die Peripheriesteuerung zuständigen Prozessen ist in einer Voreinstellung bereits berücksichtigt, daß für die auf der zentralen Steuerungsbaugruppe ZSB befindlichen peripheren Einrichtungen PSE1, PSE2 ein Prozeß x bzw. zwei Prozesse xi und xii, repräsentiert durch die Steuermodule 1 bzw. 3 und n-2, verantwortlich sind. Das bedeutet, daß diese drei Prozesse bzw. Programmodule zum 'Handling' der auf der zentralen Steuerungsbaugruppe ZSB befindlichen peripheren Einrichtungen PSE1 und PSE2 ausgeführt werden.

Welche Prozesse bzw. Programmodule ausgeführt werden müssen, damit optional angeschlossene periphere Einrichtung PSE3, PSE4 auf einer peripheren Anschlußbaugruppen PABG ihrer Funktionskategorie entsprechend behandelt werden, wird durch ein mehrstufiges Verfahren beim Inbetriebsetzen der Kommunikationsanlage KS von dieser selbständig ermittelt, wobei zugleich das Betriebssystem entsprechend eingestellt wird.

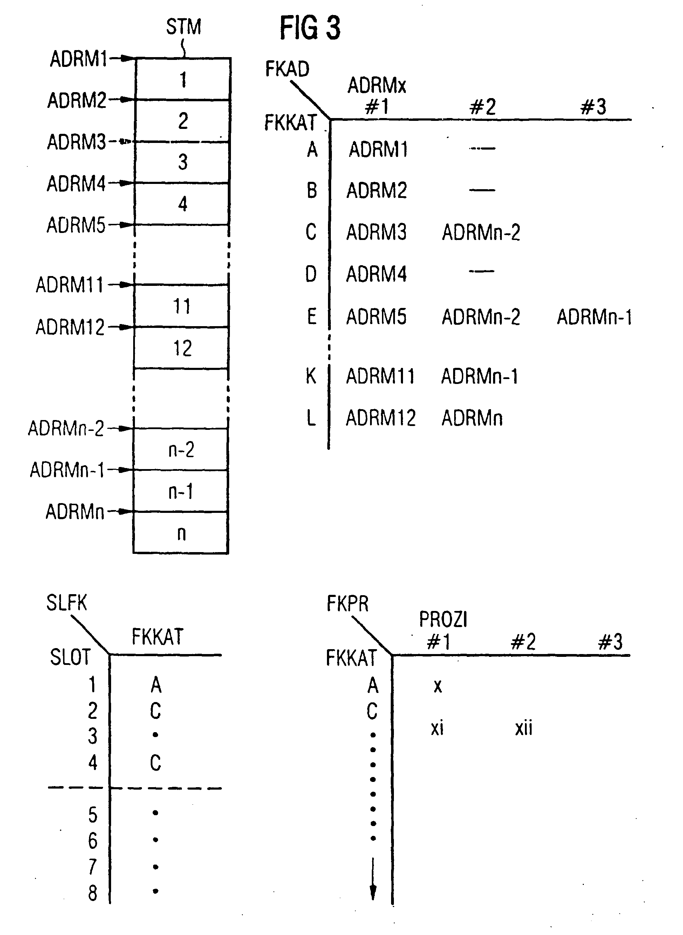

In Figur 3 sind in symbolischer Darstellung die im Programm-und Festdatenspeicher FLASH-CARD hinterlegten Steuermodule STM dargestellt, mit denen periphere Einrichtungen PSE sämtlicher Funktionskategorien betreibbar sind. Bei einer maximalen Anzahl von 12 Funktionskategorien ist mit einer Anzahl n in der Größenordnung von etwa 20 bis 25 Steuermodulen STM auszugehen. Die Anfangsadressen ADRM1,..,ADRMn bezeichnen jeweils den Beginn des zugehörigen Steuermoduls STM im Adreßraum des Programm- und Festdatenspeichers FLASH-CARD.

Des weiteren sind drei das erfindungsgemäße Verfahren unterstützende, ebenfalls im Programm- und Festdatenspeichers FLASH-CARD gespeicherte Tabellen symbolisch dargestellt. Eine statisch niedergelegte Funktions-Steuermodultabelle FKAD weist zu jeder möglichen Funktionskategorie FKKAT A,..,L an Position #1 die Anfangsadresse ADRM eines zur Behandlung einer peripheren Einrichtung der betreffenden Funktionskategorie FKKAT auszuführenden primären Steuermodules STM auf. Einige Funktionskategorien FKKAT sehen zusätzlich noch sekundäre Steuermodule vor, deren Anfangsadresse ADRM an Position #2 bzw. #3 zur betreffenden Funktionskategorie in der Funktions-Steuermodultabelle FKAD hinterlegt sind. Wie bereits erwähnt, ist diese Tabelle statisch, d.h. ihr Inhalt wird durch das Kommunikationssystem während dessen Betriebes nicht verändert.

Eine erste dynamische Tabelle SLFK speichert die Zuordnung der Funktionskategorie FKKAT zu den im Kommunikationssystem vorhandenen Einbauplätzen SLOT1,..,SLOT8 für periphere Anschlußbaugruppen PABG, wobei die ersten beiden Einbauplätze SLOT1, SLOT2 durch die beiden auf der zentralen Steuerungsbaugruppe ZSB befindlichen peripheren Einrichtungen PSE1, PSE2 belegt sind.

Eine weitere dynamische Tabelle FKPR speichert zu jeder im Kommunikationssystem als zu unterstützend ermittelten Funktionskategorie FKKAT die für die Behandlung einer peripheren Einrichtung dieser Funktionskategorie vom Betriebssystem vorgesehenen Prozeßidentifikatoren PROZI (zur Unterscheidung wurden für die Prozeßidentifikatoren PROZI Zahlen in römischer Schreibweise benutzt).

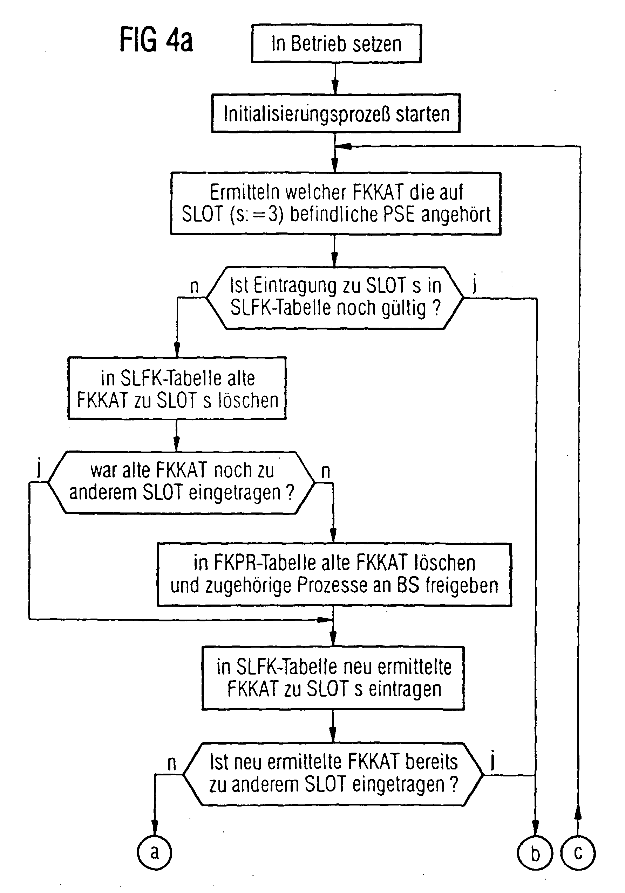

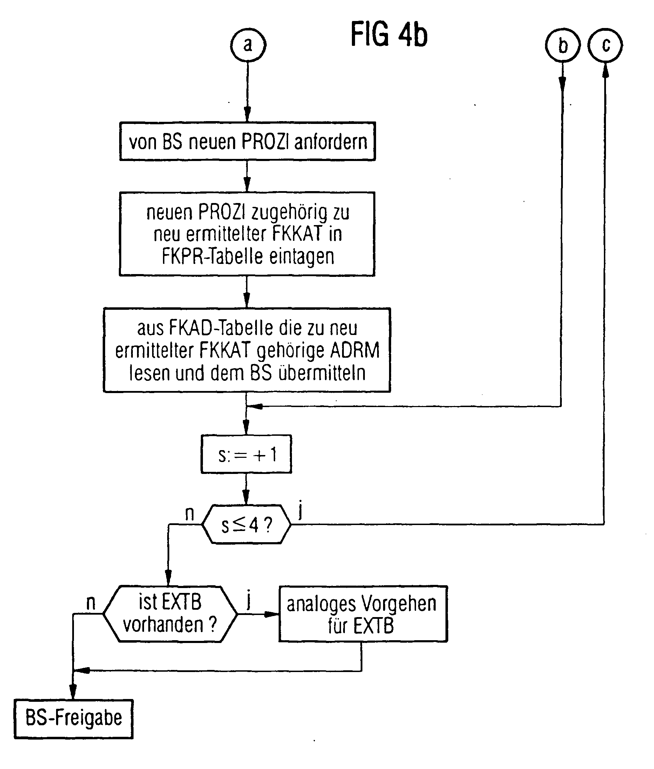

In Figur 4a und der als Fortsetzung zu dieser anzusehenden Figur 4 b ist ein Ablaufdiagramm basierend auf dem erfindungsgemäßen Verfahren dargestellt.

Nach einem Inbetriebsetzen des Kommunikationssystems, dies kann eine erstmalige Inbetriebnahme, eine gewöhnliche Inbetriebnahme nach einem Abschalten der Anlage oder auch eine Inbetriebnahme aufgrund eines system-internen Rücksetzvorganges sein, wird vom Betriebssystem BS zunächst ein Initialisierungsprozeß aktiviert.

Im Zuge der Ausführung dieses Initialisierungsprozesses wird jeder Einbauplatz SLOT daraufhin überprüft, ob sich an dem betreffenden Einbauplatz SLOT eine periphere Anschlußbaugruppe PABG befindet, und falls dies der Fall ist, welcher Funktionskategorie FKKAT die periphere Einrichtung auf der betreffenden peripheren Anschlußbaugruppe angehört.

Das Ermitteln der Funktionskategorie FKKAT kann in dem Fachmann bekannter Weise z.B. dadurch erfolgen, daß ein Steuerregister auf der peripheren Einrichtung vom Mikroprozessor CPU der zentralen Steuerung ZS adressiert wird, und daraus ein Datenwort ausgelesen wird, anhand dessen die Funktionskategorie FKKAT der peripheren Einrichtungen identifizierbar ist.

Da die ersten beiden Einbauplätze durch die auf der zentralen Steuerungsbaugruppe ZSB befindlichen peripheren Einrichtungen vergeben sind, beginnt das Verfahren mit dem dritten Einbauplatz SLOT (s:=3). Nachdem ermittelt wurde, ob an dem betreffenden Einbauplatz eine periphere Anschlußbaugruppe PABG angeschlossen ist und welcher Funktionskategorie FKKAT gegebenenfalls diese Anschlußbaugruppe PABG zugehört, wird anhand der ersten dynamischen Tabelle SLFK verglichen, ob sich seit dem letzten Inbetriebsetzen bezüglich der Bestückung des betreffenden Einbauplatzes SLOT, also insbesondere bezüglich der Funktionskategorie FKKAT der an diesem Einbauplatz SLOT befindlichen peripheren Anschlußbaugruppe PABG etwas geändert hat. Sofern sich gegenüber der bisherigen Eintragung zu dem betreffenden Einbauplatz SLOT in der SLFK-Tabelle nichts verändert hat, wird der nächste Einbauplatz SLOT (s:=+1) hinsichtlich einer angeschlossenen peripheren Anschlußbaugruppe PABG und insbesondere deren Funktionskategorie FKKAT überprüft. Wird jedoch zum jeweiligen Einbauplatz SLOT eine Abweichung zwischen der eingetragenen und der ermittelten Funktionskategorie FKKAT festgestellt, wird in der ersten dynamischen Tabelle SLFK der bisherige Funktionskategoriewert (ein "." soll das Fehlen einer Anschlußbaugruppe PABG symbolisieren) gelöscht.

Danach wird im weiteren überprüft, ob der gelöschte Funktionskategoriewert noch zu anderen Einbauplätzen SLOT in der ersten dynamischen Tabelle SLFK eingetragen war. Ist dies nicht der Fall, dann wird die betreffende Funktionskategorie FKKAT im System offensichtlich nicht mehr unterstützt, und die bisher vom Betriebssystem zur Behandlung einer peripheren Einrichtung dieser betreffenden Funktionskategorie eingerichteten Prozesse sind damit überflüssig geworden. In der weiteren dynamischen Tabelle FKPR werden unter der betreffenden Funktionskategorie FKKAT verzeichnete Prozeßidentifikatoren PROZI zusammen mit der betreffenden Funktionskategorie FKKAT gelöscht. Die in der weiteren dynamischen Tabelle FKPR gelöschten Prozeßidentifikatoren PROZI werden außerdem im Rahmen einer Prozeßlöschungsmeldung dem Betriebssystem mitgeteilt, das daraufhin in seiner Prozeßstruktur diese Prozeßidentifikatoren PROZI als frei, d.h. als unbelegt vermerkt.

In der ersten dynamischen Tabelle SLFK wird daraufhin zu dem betreffenden Einbauplatz SLOT die neu ermittelte Funktionskategorie FKKAT eingetragen. Anschließend wird überprüft, ob in der ersten dynamischen Tabelle SLFK diese neu eingetragene Funktionskategorie FKKAT bereits zu anderen Einbauplätzen SLOT vermerkt ist. Ist dies der Fall, dann wird beim nächsten Einbauplatz SLOT (s:=+1) mit der Ermittlung der Funktionskategorie FKKAT begonnen.

War die neu ermittelte Funktionskategorie FKKAT jedoch noch nicht zu anderen Einbauplätzen eingetragen (vgl. Übergang zu Fig 4b), wird zunächst in der Funktions-Steuermodultabelle FKAD ermittelt, wieviele Positionen #1,..#3 belegt sind, also wieviele Steuermodule STM zur Behandlung einer peripheren Einrichtung der betreffenden Funktionskategorie FKKAT vorgesehen sind. Entsprechend der ermittelten Anzahl wird daraufhin das Betriebssystem BS zum Einrichten einer, der ermittelten Zahl von Steuermodulen STM entsprechenden Anzahl von Prozessen angewiesen. Das Betriebssystem BS ermittelt daraufhin freie Prozeßidentifikatoren PROZI und teilt diese dem Initialisierungsprozeß als verfügbar mit. In der weiteren dynamischen Tabelle FKPR werden zu der neu ermittelten Funktionskategorie FKKAT die vom Betriebssystem BS übermittelten Prozeßidentifikatoren PROZI eingetragen.

Damit das Betriebssystem den Programmcode identifizieren kann, der bei einer Aktivierung von durch die neu vergebenen Prozeßidentifikatoren PROZI bezeichneten Prozessen ausgeführt werden soll, wird dem Betriebssystem BS zu jedem neu vergebenen Prozeßidentifikator PROZI die Anfangsadresse ADRM des betreffenden Steuermodules STM übermittelt. Diese Anfangsadresse ADRM wird anhand der Funktions-Steuermodultabelle FKAD unter der betreffenden Funktionskategorie FKKAT gelesen. Dabei wird natürlich berücksichtigt, daß in Fällen, in denen mehrere Positionen d.h. Steuermodule STM für eine Funktionskategorie FKKAT vorgesehen sind, ein an primärer Position #1 in der Funktion-Steuermodultabelle FKAD vermerktes Steuermodul STM auch in der weiteren dynamischen Tabelle FKPR durch einen Prozeßidentifikator PROZI an primärer Position #1 repräsentiert wird.

Im Ausführungsbeispiel gehört zur Funktionskategorie C als primäres (#1) Steuermodul STM, das Steuermodul 3 mit der Anfangsadresse ADRM3, dieses Steuermodul wird dann ausgeführt, wenn der Prozeß mit dem Prozeßidentifikator xi aktiviert wird. Für den Sekundärprozeß (#2) xii wird das Steuermodul STMn-2 an der Anfangsadresse ADRMn-2 ausgeführt.

Nachdem die Einbauplätze SLOT3, SLOT4 überprüft wurden, wird im weiteren abgefragt, ob sich eine Erweiterungsbaugruppe EXTB an der zentralen Steuerungsbaugruppe ZSB befindet. Ist dies der Fall, werden auch die in Verbindung mit der Erweiterungsbaugruppe EXTB verfügbaren Einbauplätze SLOT5,..,SLOT8 in analoger Weise überprüft, und die dynamischen Tabellen und das Betriebssystem werden in entsprechender Weise neu konfiguriert. Danach kann der Initialisierungsprozeß beendet werden, wodurch das Betriebssystem in seiner auf die ermittelte also tatsächlich vorliegende Konfiguration von peripheren Einrichtungen angepaßten Weise freigegeben wird.

Während des Betriebes des Kommunikationssystems werden dann von einem Peripherie-Überwachungsprozeß die peripheren Einrichtungen z.B. in zyklischer Weise angesprochen. Anhand der ersten dynamischen Tabelle SLFK kann dazu ermittelt werden, ob und ggf. mit welcher Funktionskategorie ein jeweiliger Einbauplatz SLOT zu behandeln ist. Und anhand der weiteren dynamischen Tabelle FKPR wird zu der ermittelten Funktionskategorie der Primärprozeß ermittelt und aktiviert. Dieser kann von sich aus - sofern für die betreffende Funktionskategorie noch Sekundärprozesse vorgesehen sind - bei Bedarf diese Sekundärprozesse aktivieren.

## Patentansprüche

1. Verfahren für eine zentrale Steuerung in einem Kommunikationssystem (KS) zum autonomen Konfigurieren einer betriebssystem-verwalteten Prozeßstruktur in Abhängigkeit von angeschlossenen peripheren Einrichtungen (PSE), wobei im Zuge eines Inbetriebsetzens des Kommunikationssystems KS ein Initialisierungsprozeß aktiviert wird,
- von dem eine den angeschlossenen peripheren Einrichtungen (PSE) jeweils zugehörige Funktionskategorie (FKKAT) ermittelt wird,
- von dem anhand einer Funktions-Steuermodultabelle (FKAD) zu den ermittelten Funktionskategorien (FKKAT) jeweils wenigstens ein Steuermodulidentifikator (ADRM) zur Bezeichnung eines der Behandlung einer peripheren Einrichtung (PSE) der jeweiligen Funktionskategorie (FKKAT) dienenden, im Speicher (FLASH-CARD) der zentralen Steuerung (ZS) gespeicherten Steuermoduls (STM) ermittelt wird,
- von dem das Betriebssystem (BS) veranlaßt wird, eine in Abhängigkeit der Anzahl von ermittelten Steuermodulidentifikatoren (ADRM) bemessene Zahl neuer Prozesse unter Mitteilung der zur Identifizierung dieser neuen Prozesse betriebssystemseitig vorgesehenen Prozeßidentifikatoren (PROZI) einzurichten,
- von dem an das Betriebssystem (BS) als diesen Prozeßidentifikatoren (PROZI) zugeordnet je einer der ermittelten Steuermodulidentifikatoren (ADRM) übermittelt wird,
- und von dem die Prozeßidentifikatoren (PROZI) zur Identifizierung der für eine Behandlung der angeschlossenen peripheren Einrichtungen (PSE) zu aktivierenden Prozesse gespeichert werden.

2. Verfahren nach Anspruch 1,
**dadurch gekennzeichnet,**
**daß** vom Initialisierungsprozeß in einer dynamischen Tabelle (SLFK) zu in dem Kommunikationssystem (KS) zum Anschluß peripherer Einrichtungen (PSE) vorgesehenen Einbauplätzen (SLOT) jeweils die Funktionskategorie (FKKAT) der an dem betreffenden Einbauplatz (SLOT) befindlichen peripheren Einrichtung (PSE) nichtflüchtig gespeichert wird,
**daß** im Zuge eines darauf erfolgenden erneuten Inbetriebsetzens die in der dynamischen Tabelle (SLFK) gespeicherten Funktionskategorien(FKKAT) mit den den peripheren Einrichtungen (PSE) an den ensprechenden Einbauplätzen (SLOT) zugeordneten tatsächlich ermittelten Funktionskategorien (FKKAT) verglichen werden,
und **daß** bei erkannter Abweichung an wenigstens einem Einbauplatz (SLOT) die dynamische Tabelle SLFK bezüglich der betreffenden Einbauplätze (SLOT) aktualisiert und bei Bedarf das Betriebssystem zur Vergabe neuer Prozeßidentifikatoren (PROZI) veranlaßt wird.

3. Verfahren nach Anspruch 2,
**dadurch gekennzeichnet,**
**daß** der anhand der dynamischen Tabelle (SLFK) durchgeführte Vergleich für fest installierte periphere Einrichtungen (PSE1, PSE2), denen lediglich organisatorisch berücksichtigte Einbauplätze (SLOT1, SLOT2) zugeordnet sind, unterbleibt.

4. Kommunikationssystem mit einer eine Prozessoreinrichtung (CPU) und eine Speichereinrichtung (FLASH-CARD) aufweisenden zentralen Steuerung (ZS) und mit an diese angeschlossenen peripheren Einrichtungen (PSE) einer jeweiligen Funktionskategorie (FKKAT), wobei die zentrale Steuerung (ZS) eine mittels eines Betriebssystems verwaltete Prozeßstruktur aufweist, und ein im Zuge eines Inbetriebsetzens des Kommunikationssystems (KS) aktivierter Initialisierungsprozeß Steueranweisungen für die Prozessoreinrichtung (CPU) aufweist derart,
- daß eine den angeschlossenen peripheren Einrichtungen (PSE) jeweils zugehörige Funktionskategorie (FKKAT) ermittelt wird,
- daß anhand einer Funktions-Steuermodultabelle (FKAD) zu den ermittelten Funktionskategorien (FKKAT) jeweils wenigstens ein Steuermodulidentifikator (ADRM) zur Bezeichnung eines der Behandlung einer peripheren Einrichtung (PSE) der jeweiligen Funktionskategorie (FKKAT) dienenden, im Speicher (FLASH-CARD) der zentralen Steuerung (ZS) gespeicherten Steuermoduls (STM) ermittelt wird,
- daß das Betriebssystem (BS) veranlaßt wird, eine in Abhängigkeit der Anzahl von ermittelten Steuermodulidentifikatoren (ADRM) bemessene Zahl neuer Prozesse unter Mitteilung der zur Identifizierung dieser neuen Prozesse betriebssystemseitig vorgesehenen Prozeßidentifikatoren (PROZI) einzurichten,
- daß an das Betriebssystem (BS) als diesen Prozeßidentifikatoren (PROZI) zugeordnet je einer der ermittelten Steuermodulidentifikatoren (ADRM) übermittelt wird,
- und daß die Prozeßidentifikatoren (PROZI) zur Identifizierung der für eine Behandlung der angeschlossenen peripheren Einrichtungen (PSE) zu aktivierenden Prozesse gespeichert werden.

5. Kommunikationssystem nach Anspruch 4,
**dadurch gekennzeichnet,**
**daß** die angeschlossenen peripheren Einrichtungen (PSE) als Ergänzung zu auf einer die Prozessoreinrichtung (CPU) beinhaltenden zentralen Steuerungsbaugruppe (ZSB) befindlichen internen peripheren Einrichtungen (PSE1,PSE2) mit vorgegebener Funktionskategorie vorgesehen sind.

## Claims

1. Method for a central control in a communications system (KS) for autonomous configuration of an operating-system-administered process structure depending on connected peripheral devices (PSE), whereby an initialization process is activated during a commissioning of the communications system (KS),
- by which a functional category (FKKAT) associated in each case with the connected peripheral devices (PSE) is identified,
- by which at least one control module identifier (ADRM) is identified with reference to a function control module table (FKKAD) for the identified functional categories (FKKAT) in order to designate a control module (STM) which serves to handle a peripheral device (PSE) of the respective functional category (FKKAT) and which is stored in the memory (FLASH-CARD) of the central controller (ZS),
- by which the operating system (BS) is prompted to set up a number of new processes calculated according to the number of identified control module identifiers (ADRM), with notification of the process identifiers (PROZI) provided on the operating system side in order to identify these new processes,
- by which one of the identified control module identifiers (ADRM) is in each case transferred to the operating system (BS) as allocated to these process identifiers (PROZI),
- and by which the process identifiers (PROZI) are stored in order to identify the processes which are to be activated for handling the connected peripheral devices (PSE).

2. Method according to Claim 1,
**characterized in that**
the functional category (FKKAT) of the peripheral device (PSE) located on the relevant slot (SLOT) is in each case stored in a non-volatile manner by the initialization process in a dynamic table (SLFK) for slots (SLOT) provided in the communications system (KS) for the connection of peripheral devices (PSE), during a subsequent re-commissioning, the functional categories (FKKAT) stored in the dynamic table (SLFK) are compared with the actually identified functional categories (FKKAT) allocated to the peripheral devices (PSE) on the corresponding slots (SLOT),
and, if a difference is identified on at least one slot (SLOT), the dynamic table SLFK is updated in terms of the relevant slots (SLOT) and, if required, the operating system is prompted to allocate new process identifiers (PROZI).

3. Method according to Claim 2,
**characterized in that**
the comparison carried out with reference to the dynamic table (SLFK) is omitted for permanently installed peripheral devices (PSE1, PSE2), to which only organizationally considered slots (SLOT1, SLOT2) are allocated.

4. Communications system with a central controller (ZS) having a processor device (CPU) and a storage device (FLASH-CARD) and with peripheral devices (PSE) of a relevant functional category (FKKAT) connected to said controller, whereby the central controller (ZS) has a process structure administered by means of an operating system, and an initialization process activated during a commissioning of the communications system (KS) has control instructions for the processor device (CPU) in such a way that
- a functional category (FKKAT) associated in each case with the connected peripheral devices (PSE) is identified,
- at least one control module identifier (ADRM) is in each case identified with reference to a function control module table (FKAD) for the identified functional categories (FKKAT) in order to designate a control module (STM) which serves to handle a peripheral device (PSE) of the relevant functional category (FKKAT) and which is stored in the memory (FLASH-CARD) of the central controller (ZS),
- the operating system (BS) is prompted to set up a number of new processes calculated according to the number of identified control module identifiers (ADRM), with notification of the process identifiers (PROZI) provided on the operating system side in order to identify these new processes,
- one of the identified control module identifiers (ADRM) is in each case transferred to the operating system (BS) as allocated to these process identifiers (PROZI),
- and the process identifiers (PROZI) are stored in order to identify the processes which are to be activated for handling the connected peripheral devices (PSE).

5. Communications system according to Claim 4,
**characterized in that**
the connected peripheral devices (PSE) are provided as a supplement to internal peripheral devices (PSE1, PSE2) with a predefined functional category located on a control module (ZSB) containing the processor device (CPU).

## Revendications

1. Procédé pour une commande centrale dans un système de communication (KS) pour la configuration autonome d'une structure de processus gérée par système d'exploitation en fonction de dispositifs périphériques raccordés (PSE), un processus d'initialisation étant activé au cours d'une mise en service du système de communication (KS), lequel processus d'initialisation
- détermine une catégorie de fonction (FKKAT) respectivement associée aux dispositifs périphériques raccordés (PSE),
- détermine, à l'aide d'un tableau de modules de commande de fonction (FKAD) et pour les catégories de fonctions déterminées (FKKAT), à chaque fois au moins un identificateur de module de commande (ADRM) pour la désignation d'un module de commande (STM) servant au traitement d'un dispositif périphérique (PSE) de la catégorie de fonction respective (FKKAT) et mémorisé dans la mémoire (FLASH-CARD) de la commande centrale (ZS),
- commande le système d'exploitation (BS) pour qu'il installe un certain nombre de nouveaux processus, nombre fixé en fonction du nombre d'identificateurs de modules de commande déterminés (ADRM), avec notification des identificateurs de processus (PROZI) prévus du côté du système d'exploitation pour l'identification de ces nouveaux processus,
- transmet à chaque fois l'un des identificateurs de modules de commande déterminés (ADRM) au système d'exploitation (BS) comme associé à ces identificateurs de processus (PROZI),
- et mémorise les identificateurs de processus (PROZI) pour l'identification des processus à activer pour un traitement des dispositifs périphériques raccordés (PSE).

2. Procédé selon la revendication 1,
**caractérisé par le fait que**
à chaque fois la catégorie de fonction (FKKAT) du dispositif périphérique (PSE) situé dans le logement considéré (SLOT) est mémorisée de façon non volatile par le processus d'initialisation dans un tableau dynamique (SLFK) pour des logements (SLOT) prévus dans le système de communication (KS) pour le raccordement de dispositifs périphériques (PSE),
au cours d'une nouvelle mise en service s'effectuant ensuite, les catégories de fonctions (FKKAT) mémorisées dans le tableau dynamique (SLFK) sont comparées aux catégories de fonctions (FKKAT) effectivement déterminées associées aux dispositifs périphériques (PSE) dans les logements correspondants (SLOT),
et, en présence d'une différence dans au moins un logement (SLOT), le tableau dynamique (SLFK) est actualisé quant aux logements considérés (SLOT) et, si nécessaire, le système d'exploitation est commandé pour prescrire de nouveaux identificateurs de processus (PROZI).

3. Procédé selon la revendication 2,
**caractérisé par le fait que** la comparaison effectuée
à l'aide du tableau dynamique (SLFK) n'est pas réalisée pour des dispositifs périphériques installés à demeure (PSE1, PSE2) auxquels sont simplement associés des logements (SLOT1, SLOT2) pris en compte pour l'organisation.

4. Système de communication ayant une commande centrale (ZS) comportant un dispositif processeur (CPU) et un dispositif mémoire (FLASH-CARD) et ayant des dispositifs périphériques (PSE), raccordés à ceux-ci, d'une catégorie de fonction respective (FKKAT), la commande centrale (ZS) comportant une structure de processus gérée au moyen d'un système d'exploitation et un processus d'initialisation activé au cours d'une mise en service du système de communication (KS) comportant des instructions de commande pour le dispositif processeur (CPU), de telle sorte que
- une catégorie de fonction (FKKAT) respectivement associée aux dispositifs périphériques raccordés (PSE) est déterminée,
- à l'aide d'un tableau de modules de commande de fonction (FKAD), pour les catégories de fonctions déterminées (FKKAT), à chaque fois au moins un identificateur de module de commande (ADRM) est déterminé pour la désignation d'un module de commande (STM) servant au traitement d'un dispositif périphérique (PSE) de la catégorie de fonction respective (FKKAT) et mémorisé dans la mémoire (FLASH-CARD) de la commande centrale (ZS),
- le système d'exploitation (BS) est commandé pour installer un certain nombre de nouveaux processus, nombre fixé en fonction du nombre d'identificateurs de modules de commande déterminés (ADRM), avec notification des identificateurs de processus (PROZI) prévus du côté du système d'exploitation pour l'identification de ces nouveaux processus,
- à chaque fois l'un des identificateurs de modules de commande déterminés (ADRM) est transmis au système d'exploitation (BS) comme associé à ces identificateurs de processus (PROZI),
- et les identificateurs de processus (PROZI) sont mémorisés pour l'identification des processus à activer pour un traitement des dispositifs périphériques raccordés (PSE).

5. Système de communication selon la revendication 4,
**caractérisé par le fait que** les dispositifs périphériques raccordés (PSE) sont prévus en complément de dispositifs périphériques internes (PSE1, PSE2) ayant une catégorie de fonction prescrite et se trouvant sur un module de commande central (ZSB) contenant le dispositif processeur (CPU).
